# EUROPEAN PATENT SPECIFICATION

(11) **EP 0 735 986 B1**
(45) Date of publication and mention of the grant of the patent: **02.09.1998**
(21) Application number: 95903882.9
(22) Date of filing: 22.12.1994
(51) Int. Cl.: C02F 3/20, C02F 3/10, C02F 3/12

(54) **WASTEWATER TREATMENT**
ABWASSERAUFBEREITUNG
TRAITEMENT DES EAUX USEES

(30) Priority: 23.12.1993 GB 9326329
(43) Date of publication of application: 09.10.1996
(73) Proprietor: Proceff Limited, Amersham, Buckinghamshire HP6 6AN (GB); TODD, John James, Hartley Wintney, Hampshire RG27 8BT (GB)
(72) Inventor: TODD, John, James, Hampshire RG27 8BT (GB); HOPWOOD, Adrian, Buckinghamshire HP6 6AN (GB)
(74) Representative: Wood, Anthony Charles
(86) International application number: GB9402795
(87) International publication number: WO9517351

(56) References cited:
- EP-A- 0 213 012
- EP-A- 0 240 929
- WO-A-92/19546
- DE-A- 2 725 510
- FR-A- 2 437 866
- DATABASE WPI Week 7634, Derwent Publications Ltd., London, GB; AN 76-64107X & JP,A,51 078 058 (DAI NIPPON PLAS KK) 8 July 1976
- DATABASE WPI Week 8808, Derwent Publications Ltd., London, GB; AN 88-052642 & JP,A,63 007 897 (SHIMIZU CONSTRUCTION ET AL.) 13 January 1988

## Description

### TECHNICAL FIELD

This invention relates to the treatment of waste water by gasification, for example to the aeration or oxygenation of sewage or other waste water containing organic matter degradable by the action of oxygen thereon.

### BACKGROUND ART

A wide range of treatment methods and apparatus has been used and proposed, as also has a wide range of aeration devices for use in such methods. Oxygen does not dissolve easily or quickly in water and it is therefore in principle desirable to utilize fine bubble aerators wherein the bubbles are less than 2 mm and desirably less than 1 mm in diameter. Smaller bubbles have a larger specific surface area for oxygen transfer into the liquid, and also rise more slowly through the liquid to give a longer time for the oxygen to transfer before the bubble reaches the liquid surface. Coarse bubble aerators are less efficient in the mass of oxygen transferred per unit of energy utilized in generating the bubbles at a chosen depth in the liquid.

A known prior art treatment plant comprises a treatment vessel with a number of aerator devices secured in fixed positions to fixed air supply pipework at the base of the vessel. They are efficient in terms of oxygen transfer per unit of consumed energy but suffer from a substantial problem of fouling and clogging. If the air supply is turned off the foul water can enter the pores and the pipework and clog them with particles of organic matter, providing a habitat for growth of organisms in the pores. Dirt particles in the air supply also tend to lodge in the fine pores. One solution is never to turn off the air supply, but this can be inflexible in terms of plant operation, undesirable in terms of controlling dissolved oxygen levels and inefficient in overall energy use. It is possible to filter the air supply but this is expensive and again leads to energy inefficiency. Another solution is regular closure and draining of the plant for cleaning and unblocking or replacement of the diffusers, again leading to significant inefficiency and expense in operation. Plant closure may not be possible, for example where input demand is effectively continuous.

It has also been proposed to provide a treatment plant where the treatment vessel contains a bed of loose material, and the aerator devices are fixed in position within the bed. Aeration then causes a degree of fluidization of the bed and sustains the growth of a population of microorganisms on the material of the bed. In the presence of dissolved oxygen the microorganisms convert the organic matter in the waste water to carbon dioxide, water and to more bulky cellular materials and sludge thus alleviating the biological oxygen demand (BOD). Under appropriate operating conditions they will also convert ammonia to nitrate compounds. The surplus sludge thus formed can pass out with the effluent for eventual separation and recycling if desired.

The above discussed problems of fouling and clogging of the aerator devices and pipework are particularly acute where they are buried or caged beneath a bed of loose material. The solution of regular closing and draining of the plant for cleaning and unblocking or replacement of the diffusers is yet more inefficient and expensive due to the need also to move aside or remove the filter bed material to gain access to the buried aerators.

### DISCLOSURE OF INVENTION

An object of the present invention is to provide a method and apparatus for treatment of waste water wherein these problems are mitigated.

The document JP-A-63/007897 describes apparatus for treatment of waste water comprising a treatment vessel containing a bed of loose particulate material, and means for gasifying the bed and the waste water such that the loose particulate material moves around in a circulation pattern with the waste water substantially down to the floor of the vessel.

The present invention is characterized in that:
said loose particulate material comprises particles (80) of a substantially inert mineral adhered to, coated on or coated by plastics material to provide a habitat for microorganisms effective in waste water treatment, said material having a density in the range of from 1.0 to 1.3 g/cc; and
said gasifying means comprises one or more gasifiers (71) movably disposed within the bed and means (72) for supplying gas to the gasifiers for emission of gas bubbles to gasify the bed and the waste water, said gasifiers (71) being adapted for placement and removal from above the water level when the vessel contains the circulating waste water and the bed is being fluidized by said gasifiers.

The present invention also provides a method for treatment of waste water as set out in Claim 8.

Each said gasifier is preferably constructed, for example by internal weighting, to present an average density substantially greater than water so that it tends to position itself down at the base of the bed.

Each said gasifier may be adapted for placement and removal by suspension means such as any one or more of a wire, chain, rope, or a gas supply hose or tube serving also to supply gas to the gasifier. Alternatively the gasifiers may be located in desired positions by being secured to the ends of gas supply tubes of sufficient rigidity to control placement of the gasifiers.

Each said gasifier is preferably in the form of an apertured, flexible membrane extending over a support, and gas supply means to introduce gas to flow between the membrane and the support to inflate the membrane away from the support such that the gas from the inflated space discharges through the apertures as fine bubbles and such that when the gas supply ceases the membrane collapses into area contact with the support to substantially seal the apertures. More particularly, the or each said gasifier may be a gasifier as described in International Patent Publication No. WO 92/19546 published on 12th November, 1992.

The gasifiers thus do not require a cage, grid or mesh between themselves and the loose material. The loose material can rest directly on the gasifiers.

The loose particulate material may include granules of plastics material, such as polyethylene or polypropylene, at least partially coated with and/or adhered to particles of sand or gravel, or vice versa. The resultant particles may be in the size range of 3 to 10 mm in general diameter, i.e. considered as a sieve size. The particles may be formed by partially melting the plastics material granules, for example in hot air, and allowing them to contact the sand particles. Alternatively plastics material granules are dropped onto a pre-heated bed of sand particles.

The material can be produced to a desired density for a particular application by changing the initial proportions of mineral and plastics.

The material may be produced to have a selected density in the range of from 1.0 to 1.3 g/cc, and to have a specific surface area in excess of 600 m² per cubic metre of the loose material. One such material comprises sharp sand adhered to granules of polyethylene. Sharp sand is advantageous in having a fairly uniform particle size.

### BRIEF DESCRIPTION OF THE DRAWINGS

Embodiments of the invention will now be described, by way of example, with reference to the accompanying drawings, in which:-
Fig. 1 is a schematic view of a treatment plant according to the invention;
Fig. 2 is vertical section through a treatment vessel in another embodiment of the invention; and
Fig. 3 is a cross-section on an enlarged scale through a particle of material.

### MODES FOR CARRYING OUT THE INVENTION

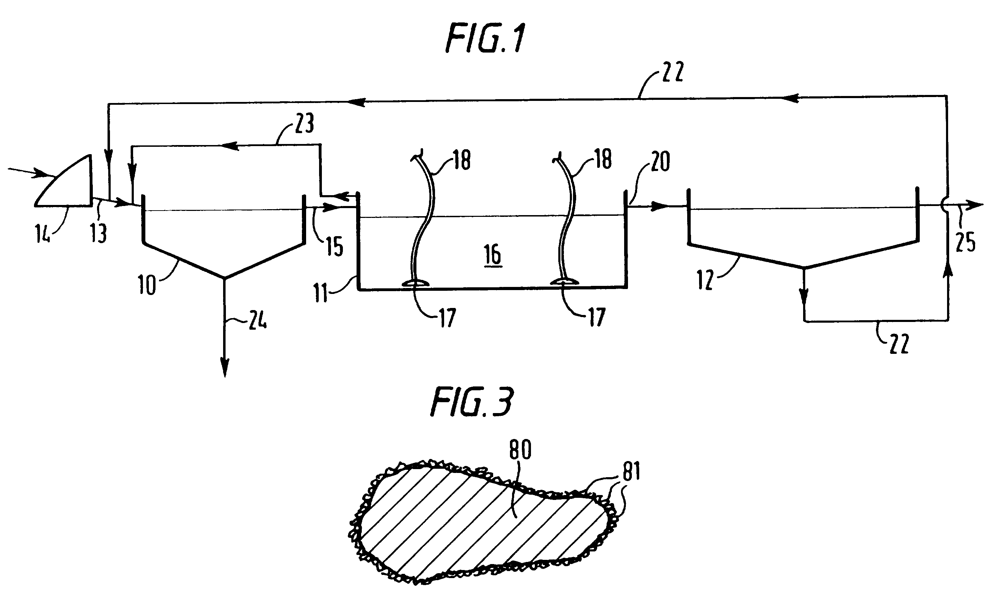

Fig. 1 shows a waste water treatment plant comprising a primary settlement vessel 10, a treatment vessel 11 and a secondary settlement vessel 12. In certain small plants the primary settlement vessel may be omitted. Sewage or biodegradable industrial waste water flows into vessel 10 through an inlet 13 and a screen 14 to remove rags and other bulky items. Other bulky matter can settle in the primary settlement vessel 10. The waste water then flows through transfer pipe and/or a weir 15 into the treatment vessel 11.

The vessel 11 contains a bed 16 of loose material and a plurality of gasifiers 17 movably disposed within the bed. Each gasifier 17 is in the form of an apertured, flexible membrane extending over a support, and gas supply means to introduce gas to flow between the membrane and the support to inflate the membrane away from the support such that gas from the inflated space discharges through the apertures as fine bubbles and such that when the gas supply ceases the membrane collapses into area contact with the support to substantially seal the apertures. A suitable such gasifier is described and illustrated in International Patent Publication No. WO 92/19546, the disclosure of which is incorporated herein by reference.

The gasifiers 17 are internally weighted to present an average density substantially greater than water so that they tend to sit down flat on the base of the vessel 11 within and beneath the bed 16.

The gasifiers are each provided with an air supply hose 18 serving to supply air or oxygen to each gasifier. The hoses 18 may be of sufficient robustness also to serve as suspension and hauling means for lowering the aerators into the vessel 11 for placement therein, and for removal as and when necessary for cleaning, checking or replacement. Alternatively the gasifiers may each also be provided with suspension means such as wires, chains or ropes (not shown), thereby permitting the air supply hose to be of less robust construction.

The bed 16 consists of loose particulate material in the form of polyethylene or polypropylene granules coated with sand or gravel. The resultant particles are in the general sieve size range of 3 mm to 10 mm, i.e. about 6 mm in diameter, and may be formed by partially melting the polyethylene, for example in hot air, and allowing it to contact the sand or gravel. The particles are quite loose and readily permit the gasifiers to be shaken down through the bed and placed where desired on the base of the vessel. No surrounding cage, grid or mesh is required.

In operation the gasifiers 17 are supplied with air and the fine bubbles emitted therefrom serve to gasify the bed and the waste water, thereby treating the waste water and creating desired circulation patterns. The treatment is effected by microorganisms which adhere to the bed particles and also live in suspension between the particles.

The waste water is treated in accordance with incoming demand flow which is allowed to flow through the treatment vessel 11 from the inlet side 15 across to the outlet. The arrangement provides considerable flexibility in operation. A number of treatment vessels 11 may be installed for operation in parallel and/or in series to provide greater flexibility to accommodate varying demand on the plant. The incoming demand flow is usually effectively continuous, although there will be considerable diurnal variation in for example domestic sewage flow.

In normal operation the incoming flow from inlet 15 moves across the vessel 11 while the aerators 17 are supplied with air to gasify the bed and the waste water by fine bubble aeration, this process also creating desired vertical circulation patterns. The treated waste water is allowed to flow through an outlet 20 to the secondary settlement vessel 12. The outlet 20 may be a pipe and/or weir and/or a stilling box and/or a simple bar or wedge wire screen as known to those in the art. Activated sludge is created by the microbiological treatment action and it is necessary from time to time to remove a portion of this sludge. In fact a small portion continuously passes out with the effluent into the secondary settlement vessel 12 and is recycled through a recycling line 22 from the secondary vessel back to the primary settlement vessel 10.

When it is desired to remove a substantial proportion of the activated sludge, the outlet 20 for effluent may be closed temporarily allowing the water level in vessel 11 to rise to a higher level than normal. The air flow to the aerators 17 is increased thereby more vigorously fluidizing the bed and placing the sludge in suspension. The sludge can then be drawn off through outlet 20, or another outlet, to flow into vessel 12 or be diverted to a sludge tank. Alternatively, the sludge, or at least a proportion thereof, can be recycled through a recycling line 23 from the treatment vessel back to the primary settlement vessel 10. Settled sludge can then be drawn off through an outlet 24 from the primary settlement vessel. Clear effluent is drawn off at an outlet 25 from the secondary settlement vessel 12.

The gasifiers 17 are efficient at fine bubble aeration and create effective fluidization of the bed and circulation patterns in the vessel 11, thereby permitting the vessel to be relatively shallow. This also reduces the pumping and air pressure energy requirements. The gasifiers are also flexible through an operating range and, in one embodiment, each aerator is capable of operating at 6 cubic metres of air per hour in steady aeration operation, and at upto 12 cubic metres per hour for vigorous fluidization for the sludge removal step and/or to assist lifting them out through the bed for checking and possible replacement.

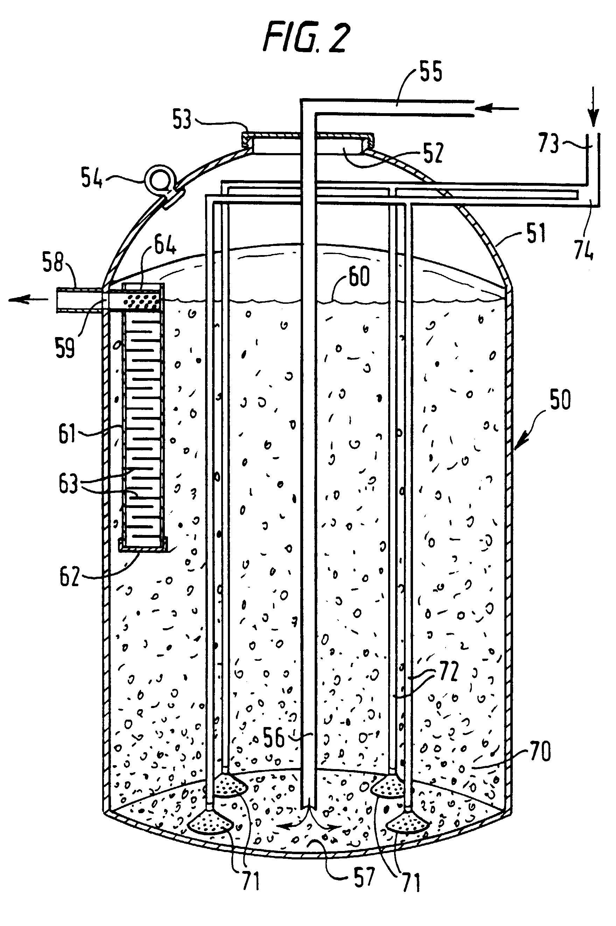

Figure 2 is a cross-section through a treatment vessel in another embodiment of the invention.

The vessel is a circular cylindrical polypropylene container 50 about 1 metre in diameter and 1.5 metres in height plus an integral dome top 51 with an access opening 52 having a closure 53, e.g. a threaded closure, and lifting lugs 54. A waste water liquid influent conduit 55 extends through an aperture in the closure and down to an inlet port 56 just above the centre of the circular floor 57 of the vessel.

To reduce the opportunity for media particles to move back into and possibly block the inlet port 56, the lower end of conduit 55 may alternatively be capped, and the lower length section of the conduit then be provided with circumferentially extending inlet slots. The slots are dimensioned to permit flow of the waste water from the conduit 55 into the vessel 50 but to reduce the chances of back-flow of media particles or other solids into the conduit 55.

An outlet conduit 58 communicates with an outlet port 59 defining the normal operating water level 60 in the vessel. A pipe 61 extends vertically from adjacent the water level 60 about half-way down the vessel. The pipe 61 has a lower end closure 62 and is provided with numerous circumferentially extending slots 63. The slots are dimensioned to permit inward flow of the treated water but to reduce the chances of media particles moving into the pipe 61 with the treated water. The wall of the pipe may be corrugated, with the slots 63 within the recesses of the corrugations.

The outlet conduit 58 communicates through port 59 with an apertured pipe 64 extending through a wall of pipe 61 and across its interior, thereby serving as a further stage of filtration. Any smaller size range media particles entering pipe 61 through the slots 63 are stilled and tend to settle at the lower end of the pipe, and can be removed by periodic removal and cleaning of the pipe 61. The combination of pipes 61 and 64 greatly reduces the chances of fluidized media particles passing through into outlet conduit 58 with the treated water. It will be appreciated that a similar slotted tube may be used at the lower end of inlet conduit 55, as described above.

The vessel contains a bed 70 of loose particulate material and four gasifiers 71. The gasifiers, e.g. aerators, are as described in relation to Figure 1 and are each secured to the lower end of a semi-rigid plastics material air supply tube 72. The tubes have sufficient rigidity to tend to hold the aerators in desired positions on the floor of the vessel, preferably in a square formation centred on the centre of the circular floor 57. The tubes also have sufficient strength to serve for placement and removal of the aerators beneath the bed 70 by manipulation through the access opening 52. Under these circumstances it is not necessary for the aerators to be weighted, although weighting can be desirable. The aerators may be supplied through a single air supply tube 73 and a manifold 74 for balanced operation. This arrangement is simple and effective and permits a choice by the plant operator of the number and positioning of the aerators.

Initially the vessel is suitably charged to at least one-third of its depth, i.e. to approximately 500 litres capacity, with the loose particulate material to form the fluidizable bed 70. Conveniently the aerators 71 and the supply tubes 72 have been placed in position before the bed is charged. Although the aerators may be positioned and moved during operation when the vessel is full with circulating waste water and the bed is being fluidized, it is not usually preferred to attempt to move the aerators down through a dry bed of the material.

The loose particulate material is as previously described, and may preferably comprise sharp sand adhered to granules of polyethylene to produce particles having a density of about 1.1 to 1.2 g/cc, a specific surface area in excess of about 600 m² per cubic metre of the loose material, and a particle size generally in the range of 4 to 6 mm in diameter, although larger particles of 5 to 10 mm or even up to about 20 mm have proved acceptable. Such materials have been found to provide a particularly suitable habitat for a high population density of microorganisms of the type effective in waste water treatment.

Figure 3 is a cross-section through a typical particle of such material. A granule 80 of polyethylene has a large plurality of grains 81 of sharp sand adhered thereto by partial melting so as partially to embed said grains on the granules. In practice it is found that only a small proportion of the sand grains become dislodged from the media particles during circulation in use. Experience to date indicates that the particles should have an effective life of a number of years.

In operation the aerators create a circulation pattern with a strong central upthrust and a rather less vigorous downflow around the periphery of the vessel. This serves to fluidize substantially the whole bed such that the loose particulate material moves around in the circulation pattern with the waste water. The concentration of the particles is low adjacent the water surface and increases steadily downwards. The circulation induced by the aeration, in cooperation with the selected density of the media particles, is such that the bed is in motion, i.e. is fluidized, substantially down to the floor of the vessel so as to substantially eliminate stagnant or anaerobic masses on the floor of the vessel.

In the above embodiment the waste water inlet port 56 is adjacent the floor of the vessel and the treated water outlet port 59 is at the water level. In other embodiments the inlet and the outlet may be in other positions on the vessel, provided that there is no direct path from the inlet to the outlet such that untreated waste water might move directly from the inlet to the outlet. The appropriate criterion is to direct the incoming waste water, e.g. from the top, into a vigorous portion of the circulation pattern in the fluidized bed such that raw waste water is immediately drawn into and around the fluidized bed for substantial exposure to and treatment by the microorganisms that adhere to the bed particles.

### INDUSTRIAL APPLICABILITY

The above described treatment vessel 50 lends itself to flexible and to modular use, for example in small scale sewage, domestic and industrial waste water treatment plants. One or more vessels may be used in series and/or in parallel to form a complete treatment plant, or alternatively may be installed upstream or downstream of an existing plant susceptible to overload conditions. In an upstream mode the vessel can be operated as a "BOD capsule", i.e. a pre-treatment to reduce the biological oxygen demand on the main plant. In a downstream mode the vessel can be operated as an "ammonia capsule", i.e. a post-treatment to convert ammonium ions to nitrate compounds. The vigour of the circulation, dwell time and other operating parameters are flexible and modular and can be readily adapted to the different usages.

## Claims

1. Apparatus for treatment of waste water comprising a treatment vessel (50) containing a bed (70) of loose particulate material (80), and means (71,72) for gasifying the bed and waste water such that the loose particulate material moves around in a circulation pattern with the waste water substantially down to the floor of the vessel;
characterized in that:
said loose particulate material comprises particles (80) of a substantially inert mineral adhered to, coated on or coated by plastics material to provide a habitat for microorganisms effective in waste water treatment, said material having a density in the range of from 1.0 to 1.3 g/cc; and
said gasifying means comprises one or more gasifiers (71) movably disposed within the bed and means (72) for supplying gas to the gasifiers for emission of gas bubbles to gasify the bed and the waste water, said gasifiers (71) being adapted for placement and removal from above the water level when the vessel contains the circulating waste water and the bed is being fluidized by said gasifiers.

2. Apparatus according to Claim 1 characterized in that each said gasifier (71) is provided with internal weighting to present an average density substantially greater than that of water so that it tends to position itself down at the base of the bed.

3. Apparatus according to Claim 1 or Claim 2 characterized in that each said gasifier (71) is adapted for placement and removal by a gas supply tube (72) extending down to the gasifier from above water level and serving also to supply gas to the gasifier.

4. Apparatus according to any one of Claims 1 to 3 characterized in that each said gasifier (71) is in the form of an apertured, flexible membrane extending over a support, and gas supply means to introduce gas to flow between the membrane and the support to inflate the membrane away from the support such that the gas from the inflated space discharges through the apertures as fine bubbles and such that when the gas supply ceases the membrane collapses into area contact with the support to substantially seal the apertures.

5. Apparatus according to any one of Claims 1 to 4 characterized in that said material has a specific surface area in excess of 600 m² per cubic metre of the loose material.

6. Apparatus according to any one of Claims 1 to 5 characterized in that such material has a particle size range of 3 mm to 10 mm in diameter.

7. Apparatus according to any one of Claims 1 to 6 characterized in that said material comprises particles of sand adhered to granules of polyethylene.

8. A method for treatment of waste water comprising allowing waste water to enter a treatment vessel (50) containing a bed (70) of loose particulate material (80), and gasifying the bed and the waste water such that the loose particulate material moves around in a circulation pattern with the waste water substantially down to the floor of the vessel;
characterized in that:
said loose particulate material comprises particles (80) of a substantially inert mineral adhered to, coated on or coated by plastics material to provide a habitat for microorganisms effective in waste water treatment, said material having a density in the range of from 1.0 to 1.3 g/cc; and
said gasifying step is effected by gas bubbles emitted from one or more gasifiers (71) movably disposed within the bed, said gasifiers being adapted for placement and removal from above the water level when the vessel contains the circulating waste water and the bed is being fluidized by said gasifiers.

## Patentansprüche

1. Vorrichtung zur Behandlung von Abwasser, enthaltend einen Behandlungsbehälter (50) mit einem Bett (70) aus losem teilchenförmigem Material (80) und Einrichtungen (71, 72) zur Begasung des Betts und des Abwassers derart, daß das lose teilchenförmige Material in einem Zirkulationsmuster mit dem Abwasser im wesentlichen nach unten in Richtung des Behälterbodens umläuft;
dadurch gekennzeichnet, daß:
das lose teilchenförmige Material aus Teilchen (80) aus einem an Kunststoffmaterial anhaftendem, darauf aufgebrachtem oder damit überzogenen, im wesentlichen inerten Mineral besteht, wodurch ein Lebensraum für bei der Abwasserbehandlung wirksame Mikroorganismen geschaffen wird, wobei das Material eine Dichte im Bereich von 1,0 bis 1,3 g/cm³ aufweist; und
die Begasungseinrichtung einen oder mehrere, im Bett beweglich angeordnete Begaser (71) und Einrichtungen (72) zur Zufuhr von Gas zu den Begasern zwecks Ausstoß von Gasblasen zur Begasung des Betts und des Abwassers umfaßt, wobei die Begaser (71) so ausgeführt sind, daß sie von einer Höhe über dem Wasserspiegel in Position gebracht und herausgezogen werden können, wenn der Behälter das zirkulierende Abwasser enthält und das Bett durch die Begaser verwirbelt wird.

2. Vorrichtung nach Anspruch 1, dadurch gekennzeichnet, daß jeder Begaser (71) intern beschwert ist, damit seine durchschnittliche Dichte wesentlich größer als die Dichte von Wasser ist, so daß er dazu neigt, eine Position am Boden des Betts einzunehmen.

3. Vorrichtung nach Anspruch 1 oder 2, dadurch gekennzeichnet, daß jeder Begaser (71) durch ein sich von oberhalb des Wasserspiegels zum Begaser erstreckendes Gaszufuhrrohr (72) so ausgeführt ist, daß er in Position gebracht und herausgezogen werden kann, wobei das Gaszufuhrrohr auch zur Zufuhr von Gas zum Begaser dient.

4. Vorrichtung nach einem der Ansprüche 1 bis 3, dadurch gekennzeichnet, daß jeder Begaser (71) die Form einer sich über einen Träger erstreckenden, mit Öffnungen versehenen, flexiblen Membran und von Gaszufuhreinrichtungen zur Einleitung von Gas, das zwischen der Membran und dem Träger strömt und dadurch die Membran vom Träger weg so aufbläht, daß das Gas aus dem aufgeblähten Raum in Form von feinen Bläschen durch die Öffnungen ausströmt und daß die Membran bei Unterbrechung der Gaszufuhr so zusammenfällt; daß sie in Flächenkontakt mit dem Träger kommt und die Öffnungen im wesentlichen verschließt, hat.

5. Vorrichtung nach einem der Ansprüche 1 bis 4, dadurch gekennzeichnet, daß das Material eine spezifische Oberfläche über 600 m² pro Kubikmeter des losen Materials aufweist.

6. Vorrichtung nach einem der Ansprüche 1 bis 5, dadurch gekennzeichnet, daß ein derartiges Material Teilchen mit einem Durchmesser im Bereich von 3 mm bis 10 mm aufweist.

7. Vorrichtung nach einem der Ansprüche 1 bis 6, dadurch gekennzeichnet, daß das Material aus an Poly-ethylengranulat anhaftenden Sandteilchen besteht.

8. Verfahren zur Behandlung von Abwasser, bei dem man Abwasser in einen Behandlungsbehälter (50) mit einem Bett (70) aus losem teilchenförmigem Material (80) eintreten läßt und das Bett und das Abwasser so begast, daß das lose teilchenförmige Material in einem Zirkulationsmuster mit dem Abwasser im wesentlichen nach unten in Richtung des Behälterbodens umläuft;
dadurch gekennzeichnet, daß:
das lose teilchenförmige Material aus Teilchen (80) aus einem an Kunststoffmaterial anhaftendem, darauf aufgebrachtem oder damit überzogenen, im wesentlichen inerten Mineral besteht, wodurch ein Lebensraum für bei der Abwasserbehandlung wirksame Mikroorganismen geschaffen wird, wobei das Material eine Dichte im Bereich von 1,0 bis 1,3 g/cm³ aufweist; und
man die Begasung mit Gasblasen vornimmt, die aus einem oder mehreren, im Bett beweglich angeordneten Begasern (71) ausgestoßen werden, wobei die Begaser so ausgeführt sind, daß sie von einer Höhe über dem Wasserspiegel in Position gebracht und herausgezogen werden können, wenn der Behälter das zirkulierende Abwasser enthält und das Bett durch die Begaser verwirbelt wird.

## Revendications

1. Dispositif pour le traitement des eaux usées comprenant une cuve de traitement (50) contenant un lit (70) de matériau particulaire meuble (80), et un moyen (71, 72) pour gazéifier le lit et les eaux usées de façon que le matériau particulaire meuble se déplace selon un circuit de circulation avec les eaux usées pratiquement jusqu'au fond de la cuve ;
caractérisé en ce que :
ledit matériau particulaire meuble comprend des particules (80) d'un minéral pratiquement inerte collées sur, appliquées sur, ou recouvertes d'une matière plastique pour fournir un habitat à des micro-organismes efficaces pour le traitement des eaux usées, ledit matériau ayant une densité allant de 1,0 à 1,3 g/cm³ ; et
ledit moyen de gazéification comprend un ou plusieurs gazéificateurs (71) disposés de façon à pouvoir être déplacés à l'intérieur du lit et des moyens (72) d'alimentation des gazéificateurs en gaz pour la formation de bulles gazeuses destinées à gazéifier le lit et les eaux usées, lesdits gazéificateurs (71) étant conçus pour pouvoir être positionnés et retirés à partir d'un point situé au-dessus du niveau de l'eau quand la cuve contient les eaux usées en circulation et que le lit est fluidisé par lesdits gazéificateurs.

2. Le dispositif selon la revendication 1 caractérisé en ce que chacun desdits gazéificateurs (71) est doté d'une charge de lestage interne, pour avoir une densité moyenne notablement supérieure à celle de l'eau, de façon à avoir tendance à se placer de lui-même au fond du lit.

3. Le dispositif selon la revendication 1 ou 2 caractérisé en ce que chacun desdits gazéificateurs (71) est conçu pour pouvoir être positionné et retiré au moyen d'un tube d'alimentation en gaz (72) descendant dans le gazéificateur à partir d'un point situé au-dessus du niveau de l'eau et servant également à alimenter le gazéificateur en gaz.

4. Un dispositif selon l'une quelconque des revendications 1 à 3 caractérisé en ce que chacun desdits gazéificateurs (71) se présente sous la forme d'une membrane souple, munie d'ouvertures, s'étendant sur un support, et de moyens d'alimentation en gaz destiné à introduire le gaz entre la membrane et le support de manière à gonfler la membrane et à la séparer du support pour que le gaz contenu dans l'espace gonflé s'échappe par les ouvertures sous forme de fines bulles et que, quand l'alimentation en gaz cesse, la membrane s'affaisse et soit de nouveau en contact avec la surface du support, ce qui a pour effet d'obturer pratiquement les ouvertures.

5. Le dispositif selon l'une quelconque des revendications 1 à 4 caractérisé en ce que ledit matériau a une surface spécifique supérieure à 600 m² par mètre cube du matériau meuble.

6. Le dispositif selon l'une quelconque des revendications 1 à 5 caractérisé en ce que ce matériau a une granulométrie allant de 3 à 10 mm de diamètre.

7. Le dispositif selon l'une quelconque des revendications 1 à 6 caractérisé en ce que ledit matériau comprend des particules de sable collées à des granules de polyéthylène.

8. Procédé de traitement des eaux usées consistant à introduire des eaux usées dans une cuve de traitement (50) contenant un lit (70) de matériau particulaire meuble (80), et à gazéifier le lit et les eaux usées de façon que le matériau particulaire meuble se déplace selon un circuit de circulation avec les eaux usées pratiquement jusqu'au fond de la cuve ;
caractérisé en ce que :
ledit matériau particulaire meuble comprend des particules (80) d'un minéral pratiquement inerte collées sur, appliquées sur, ou recouvertes d'une matière plastique pour fournir un habitat à des micro-organismes efficaces pour le traitement des eaux usées, ledit matériau ayant une densité allant de 1,0 à 1,3 g/cm³ ; et
ladite opération de gazéification est effectuée par les bulles gazeuses formées par un ou plusieurs gazéificateurs (71) disposés de façon à pouvoir être déplacés à l'intérieur du lit, lesdits gazéificateurs étant conçus pour pouvoir être positionnés et retirés à partir d'un point situé au-dessus du niveau de l'eau quand la cuve contient les eaux usées en circulation et que le lit est fluidisé par lesdits gazéificateurs.
